# EUROPÄISCHE PATENTSCHRIFT

(11) **EP 1 563 332 B1**
(45) Veröffentlichungstag und Bekanntmachung des Hinweises auf die Patenterteilung: **27.03.2013**
(21) Anmeldenummer: 03785511.1
(22) Anmeldetag: 14.11.2003
(51) Int. Cl.: G02B 21/00, G01B 11/02, G01B 11/24, G01B 11/28, G01B 11/30

(54) **VERFAHREN ZUR VERBESSERUNG DES SIGNAL-RAUSCH-VERHÄLTNISSES BEI KONFOKALEN MIKROSKOPEN MIT MULTI-PINHOLE FILTERUNG**
METHOD FOR IMPROVING THE SIGNAL-TO-NOISE RATIO IN CONFOCAL MICROSCOPES WITH MULTI-PINHOLE FILTERING
PROCEDE D'AMELIORATION DU RAPPORT SIGNAL SUR BRUIT DANS DES MICROSCOPES CONFOCAUX A FILTRAGE AU MOYEN DE MULTIPLES OUVERTURES EN TROUS D'EPINGLE

(30) Priorität: 18.11.2002 DE 10253891
(43) Veröffentlichungstag der Anmeldung: 17.08.2005
(73) Patentinhaber: NanoFocus AG, 46149 Oberhausen (DE)
(72) Erfinder: WEBER, Mark, A., 47445 Moers (DE)
(74) Vertreter: Röther, Peter
(86) Internationale Anmeldenummer: PCT/DE2003/003780
(87) Internationale Veröffentlichungsnummer: WO 2004/046784

(56) Entgegenhaltungen:
- EP-A- 0 440 342
- US-A- 5 067 805
- US-A- 5 861 984

## Beschreibung

Vorrichtung zur räumlichen Trennung von Lichtreflexen eines Strahlteilerelements zur Anwendung in der konfokalen Mikroskopie zur computergesteuerten Erzeugung dreidimensionaler Oberflächenbilder.

Ein derartiges konfokales Mikroskop ist beispielsweise aus der EP 0 440 342 A bekannt. Das Strahlteilerelement ist hier als halbdurchlässiger Spiegel ausgeführt. Zur Ausschaltung von Störlicht ist hier ein sogenannter spatial-Filter vorgesehen.

Die erfindungsgemäß beschriebene Vorrichtung dient zur Reduzierung von Lichtreflexen und Streulicht bei rechnergesteuerten konfokalen Mikroskopen. Wenn der Beleuchtungsstrahl und der Detektionsstrahl durch dasselbe Pinhole gelangen, besteht eine erhöhte Anfälligkeit der Messapparatur auf entstehende interne Lichtreflexe und Streulicht.

Bei der Verwendung von sich bewegenden Lochmusterscheiben als Multi-Pinhole wird der detektierbare Nutzlichtanteil um den Lochbedeckungsgrad reduziert. Dieser beträgt geometrisch bedingt z.B. etwa 0,01 bei einem Lochdurchmesser von 20µm und einem mittleren Lochabstand von 200µm. Die vor der Scheibe entstehenden Reflexe sind demnach 100-fach überhöht und können das Signal-Rausch-Verhältnis eines konfokalen Mikroskops deutlich reduzieren. Im Stand der Technik wurde bislang überlicherweise folgendermaßen gearbeitet. Beim Strahlengang von der Lichtquelle über einen vor dem Pinhole befindlichen Strahlteiler, der einfallendes und zu detektierendes Licht separiert, war der Strahlteiler so orientiert, dass das Licht senkrecht zu den Oberflächen einfällt. An jeder Grenzfläche zwischen Materialien mit unterschiedlichen Brechungsindex treten auch bei Verwendung von Vergütungen zur Entspiegelung die unerwünschten Reflexionen auf. Diese haben dieselbe Ausbreitungsrichtung wie der Nutzlichtanteil.

Diese gleichen Eigenschaften sind ungünstig für eine räumliche Trennung beider Lichtanteile. Deswegen müssen momentan Strahlteilerwürfel mit sehr guten Separierungseigenschaften der Strahl teilenden Schicht und sehr guten Antireflexionsbeschichtungen der übrigen Flächen verwendet werden. Entstehende Lichtreflexe gelangen mit nahezu voller Intensität auf den Detektor. Diese Problematik hat ein schlechtes Signal-Rausch-Verhältnis der Messauswertung zur Folge, welches sich in Rauschanteilen der berechneten Oberflächentopographie äußert. Somit mussten bisher zur Unterdrückung der Lichtreflexe hoch präzise Polarisationsoptiken verwendet werden, die mit einer hochwertigen Entspiegelung versehen sind. Trotzdem treten im konfokalen Bild besonders bei schwach reflektierenden Proben starke intrinsische Lichtreflexe auf, welche sich störend auf die Messung ausüben.

Daher ist im Stand der Technik (US 5067805 sowie US 5861984) bereits vorgeschlagen worden, das Strahlteilerelement entgegen seiner oben beschriebenen üblichen orientierung um einen Winkel α, zu verdrehen. Bei einem Verdrehwinkel α, wird der einfallende Lichtstrahl entsprechend dem Reflexionsgesetz um 2α gedreht, um den Detektor und die Lochblende in der ursprünglichen Orientierung belassen zu können.

Die an den Oberflächen entstehenden Lichtreflexe stehen in einem Winkel von 2α zu der Ausbreitungsrichtung des Nutzlichtanteils und sind über einen räumlichen Filter separierbar. Durch diese Anordnung wird der Anteil der auf den Detektor treffenden Lichtreflexe des Strahlteilers gegenüber der ursprünglichen Anordnung erheblich reduziert. Durch eine Strahlfalle wird nicht reflektiertes Licht ausgeblendet.

Der Erfindung liegt gegenüber diesem Stand der Technik die Aufgabe zugrunde, die Geometrie des Strahlteilerelements zu optimieren, damit einfallender, reflektierter und detektierter Strahl orthogonale Winkel wie im eingangs genannten Stand der Technik bilden und darüber hinaus die Intensität von intrinsischem Streulicht und Lichtreflexen zu reduzieren.

Die Erfindung löst diese Aufgabe gemäß dem Patentanspruch 1 dadurch, dass der Reflexionswinkel im Strahlteiler 90±3 Grad beträgt, wobei bei einem Brechungsindex n und einer Verkippung α ein Kantenlängenverhältnis des Quaders A/B=C/D=Const. und der Winkel β zwischen der Auftrefffläche des einfallenden Strahls und der Strahl teilenden Schicht sich wie folgt berechnet: β. =45°-arcsin (sin (α)/n).

Der Strahlteiler wird so gefertigt, dass entsprechend des Einfallswinkels α die Kantenlängen des Quaders so beschaffen sind, dass der im Material befindliche Reflexionswinkel in der Strahl teilenden Schicht möglichst 90° beträgt.

Die Geometrie des Strahlteilers ist so beschaffen, dass beispielsweise bei einem Brechungsindex von n=1, 704 sich für eine Verkippung von α=7,5° ein Kantenlängenverhältnis A/B=C/D ungefähr =1,17 ergibt. Der Winkel zwischen der Strahlteilerschicht und der Oberfläche für den Einfallsstrahl berechnet sich mit den oben angegebenen Werten nach Snellius zu β =45° -arcsin(sin(α)/n ungefähr 40, 6°.

Gemäß einer vorteilhaften Rusführungsform der Erfindung ist vorgesehen, dass das Multi-pinhole eine rotierende Nipkow-Scheibe ist.

Alternativ kann das Pinhole auch eine Matrix aus Mikrospiegeln sein.

Weiterhin ist vorgesehen, dass der Strahlteiler polarisierend oder aber dichrcitisch ausgebildet ist.

Gemäß einer Weiterentwicklung der erfindungsgemäßen Vorrichtung ist vorgesehen, dass im Beleuchtungsstrahlengang zwischen Lichtquelle und dem Strahl teilenden Element eine Blendenanordnung vorgesehen ist, die so ausgestaltet ist, dass das Leuchtfeld der Geometrie des Detektors angepasst und der Öffnungswinkel des Strahls an die Apertur der verwendeten Mikroskcpobjektive angepasst ist.

Da der verwendete Detektor in der Regel rechteckig ausgebildet ist, ist in der Blendenanordnung eine rechteckige Blende vorgesehen, die einen quaderförmigen Lichttunnel mit einer rechteckigen Öffnung bildet.

Im folgenden wird die Erfindung anhand von Zeichnungen erläutert.

Es zeigen:
- Fig. 1:: Üblicher Strahlengang
- Fig. 2:: Strahlengang zum Ausblenden von Lichtreflexen mit einem Strahlteilerwürfel
- Fig. 3:: Strahlengang zum Ausblenden von Lichtreflexen mit einem Strahlteilerquader
- Fig. 4:: Blendenanordnung zur Reduzierung von Streulicht und Lichtreflexen

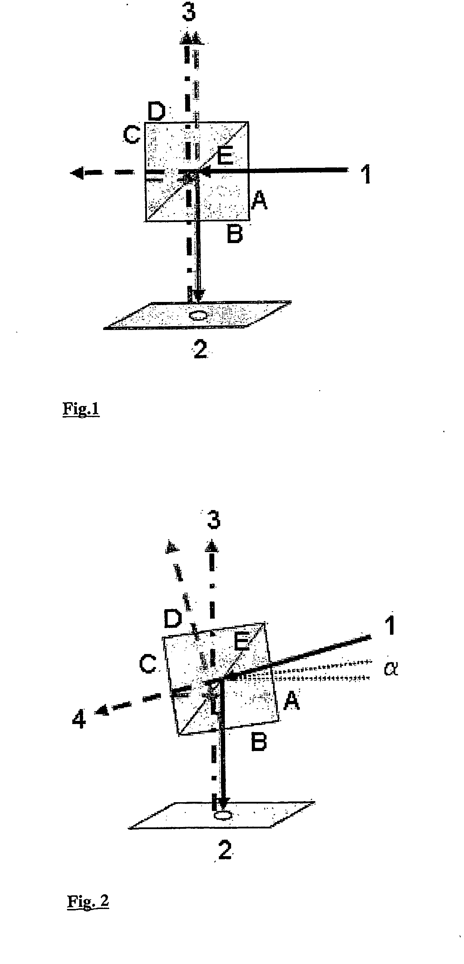

- Fig. 1:: zeigt den üblichen Strahlengang. Dieser basiert auf einem vor dem Pinhole (2) befindlichen Strahlteiler E, der einfallendes (1) und zu detektierendes Licht (3) separiert. Der Strahlteiler ist so orientiert, dass das Licht senkrecht zu den Oberflächen (A,B,C,D) einfällt. An jeder Grenzfläche zwischen Materialien mit unterschiedlichem Brechungsindex treten auch bei Verwendung von Vergütungen zur Entspiegelung die rot gestrichelt dargestellten Reflexionen auf. Diese haben dieselbe Ausbreitungsrichtung wie der blau strichpunktiert dargestellte Nutzlichtanteil.

Diese gleichen Eigenschaften sind ungünstig für eine räumliche Trennung beider Lichtanteile. Deswegen müssen momentan Strahlteilerwürfel mit sehr guten Separierungseigenschaften der strahlteilenden Schicht E und sehr guten Antireflexionsbeschichtungen der Flächen A,B,C und D verwendet werden. Entstehende Lichtreflexe gelangen mit nahezu voller Intensität auf den Detektor. Diese Problematik hat ein schlechtes Signal-Rausch-Verhältnis der Messauswertung zur Folge, welches sich in Rauschanteilen der berechneten Oberflächentopographie äußert.

Bisher mussten zur Unterdrückung der Lichtreflexe hochpräzise Polarisationsoptiken verwendet werden, die mit einer hochwertigen Entspiegelung versehen sind. Trotzdem treten im konfokalen Bild besonders bei schwach reflektierenden Proben starke intrinsische Lichtreflexe auf, welche sich störend auf die Messung auswirken.

Fig. 2 zeigt die von uns entwickelte Anordnung zur räumlichen Trennung von Lichtreflexen und Nutzlicht: Der Strahlteilerwürfel (E) wird entgegen seiner üblichen Orientierung um den Winkel α gedreht. In unserer Anordnung beträgt der Winkel α etwa 7,5 Grad. Die Drehachse steht senkrecht zur Blattebene. Um den Detektor (3) und die Lochblende (2) in der ursprünglichen Orientierung belassen zu können, wird der einfallende Lichtstrahl (1) entsprechend dem Reflexionsgesetz um 2α gedreht.

Die an den Oberflächen B und C entstehenden Lichtreflexe stehen in einem Winkel von 2α zu der Ausbreitungsrichtung des Nutzlichtanteils (strichpunktiert) und sind über einen räumlichen Filter separierbar. Durch diese Anordnung wird der Anteil der auf den Detektor treffenden Lichtreflexe des Strahlteilers gegenüber der ursprünglichen Anordnung erheblich reduziert. Durch eine Strahlfalle (4) wird nicht reflektiertes Licht ausgeblendet.

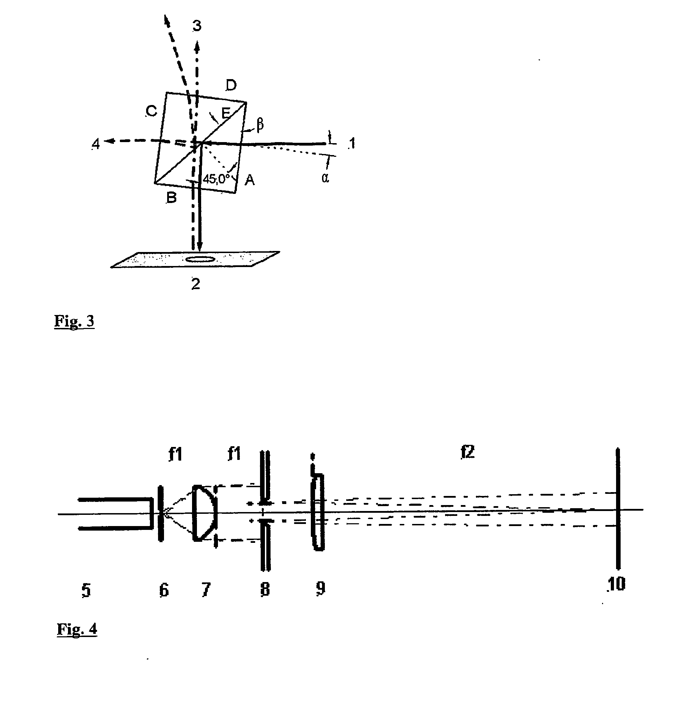

Fig. 3 zeigt die von uns entwickelte Anordnung zur räumlichen Trennung von Lichtreflexen und Nutzlicht in einer optimierten Geometrie mit den Bezeichnungen aus Fig.2: Der Strahlteiler wird so gefertigt, dass entsprechend des Einfallswinkels α die Kantenlängen so beschaffen sind, dass der im Material befindliche Reflexionswinkel an der strahlteilenden Schicht möglichst 90 Grad beträgt. In dieser Anordnung bilden einfallender, reflektierter und detektierter Strahl demzufolge orthogonale Winkel wie in der ursprünglichen Bauweise nach Fig.1. Die Geometrie des Strahlteilers ist so beschaffen, dass bei einem Brechungsindex von n = 1,704 sich z.B. für eine Verkippung von α = 7,5 Grad ein Kantenlängenverhältnis A/B = C/D ≈ 1,17 ergibt. Der Winkel β berechnet sich mit den oben angegebenen Werten nach Snellius zu β = 45° -arcsin(sin(α)/n) ≈ 40,6 Grad.

Fig. 4 zeigt eine weitere ergänzende Entwicklung zur Reduzierung der Intensität von intrinsischem Streulicht und Lichtreflexen durch die Ausblendung von Lichtanteilen des Beleuchtungsstrahls, die nicht als Nurzlicht dienen können. Im Allgemeinen beruht das Prinzip darauf, dass nur Licht in das Mikroskop eingekoppelt wird, welches für die Messung nutzbar ist. Da wir mit einer CCD- Kamera nur einen rechteckigen Bereich der Probe beobachten, sollte das beleuchtete Bildfeld ebenfalls rechteckig sein.

Das von der Lichtquelle (5) emittierte Licht gelangt durch eine rechteckige Blendenöffnung (6). Die Blendenöffnung wird mittels der Linse L1 (7) mit der Brennweite f1 und der Linse L2 (9) mit der Brennweite f2 mit der Vergrößerung V=f2/f1 auf die Zwischenbildebene (10) und somit auf die Probenoberfläche abgebildet. Durch die rechteckige Blendenöffnung (6) wird außerhalb des relevanten Probenbereichs auftreffendes Licht ausgeblendet.

Die kreisförmige Blendenöffnung (8) dient zum Ausblenden von Lichtanteilen, welche die Eintrittspupille des Mikroskopobjektivs nicht treffen können. Das bedeutet eine Anpassung der numerischen Apertur der Beleuchtung an die der verwendeten Objektive. Um trotz dieser Blende eine ausreichend homogene Beleuchtungsintensität erreichen zu können, ist die Position dieser Blende wichtig.

In unserer Entwicklung befindet sich die oben beschriebene rechteckige Blende in der Brennebene der Linse L1, (7) und die Blende (8) mit dem Durchmesser d in deren Fourierebene, also in der rückwärtigen Brennebene der Linse L1. Die numerische Apertur des transmittierten Lichts errechnet sich zu NA = d / (2 f2) und wird durch die Wahl des Blendendurchmessers an die bildseitige NA des verwendeten Objektivs angepasst. Der Durchmesser der Blendenöffnung bestimmt sich zu d= 2 f₂ NA_{obj} / V. Dabei ist V die Vergrößerung des verwendeten Objektivs und NA_{obj} dessen numerische Apertur. Wird ein Objektiv mit V=20 und NA_{obj} = 0,46 verwendet, kann man z.B. mit f2 = 120 mm den Durchmesser d = 5,5 mm errechnen. Aus technischen Gründen setzen wir auch Blendendurchmesser ein, die von diesen Werten teilweise abweichen. Daraus ergibt sich eine geringfügige Fehlanpassung der Aperturen, die sich bis zu einem gewissen Grade nur wenig auf die Messresultate auswirkt.

Durch diese Blendenkombination kann man das Verhältnis von Nutz- zu Streulicht erheblich verbessern.

## Patentansprüche

1. Vorrichtung zur räumlichen Trennung von Lichtreflexen eines Strahlteilerelements (E) zur Anwendung in der konfokalen Mikroskopie zur computergesteuerten Erzeugung dreidimensionaler Oberflächenbilder mit einer Lichtquelle (5), einem als Quader ausgebildeten Strahlteilerelements (E) sowie einer im Beleuchtungs- und Detektionsstrahlengang hinter dem Strahlteilerelement angeordneten Multi-pinhole-Anordnung (2), wobei der einfallende Strahl (1) auf eine Auftrefffläche des als Quader ausgebildeten Strahlteilerelements (E) fällt, der gegen den einfallenden Strahl (1) gedreht ist und die Geometrie des Strahlteilerelements (E) so beschaffen ist, dass der Reflexionswinkel im Strahlteilerelement 90±3 Grad beträgt, wobei bei einem Brechungsindex n und einer Verkippung α bei einem Kantenlängenverhältnis des Quaders A/B=C/D=const. der Winkel β zwischen der Auftrefffläche (A) des einfallenden Strahls (1) und der Strahl teilenden Schicht (E) sich wie folgt berechnet: β.=45°-arcsin(sin(α)/n).

2. Vorrichtung nach Anspruch 1,
**dadurch gekennzeichnet,**
**dass** zwischen der Lichtquelle (5) und dem Strahl teilenden Element (E) eine Blendenanordnung (6,8) vorgesehen ist, durch die das Leuchtfeld an die Geometrie des Detektors angepasst und der Öffnungswinkel des Strahls an die Apertur der verwendeten Mikroskopobjektive angepasst ist, wobei eine Blende (6) mit rechteckiger Öffnung vorgesehen ist.

3. Vorrichtung nach Anspruch 1 oder 2,
**dadurch gekennzeichnet,**
**dass** das Multi-pinhole (2) eine rotierende Nipkow-Scheibe ist.

4. Vorrichtung nach einem der Ansprüche 1 bis 3,
**dadurch gekennzeichnet,**
**dass** das Multi-pinhole (2) eine Matrix aus Mikrospiegeln ist.

5. Vorrichtung nach einem der Ansprüche 1 bis 4,
**dadurch gekennzeichnet, dass** der Strahlteiler polarisierend ist.

6. Vorrichtung nach einem der Ansprüche 1 bis 4,
**dadurch gekennzeichnet,**
**dass** der Strahlteiler dichroitisch ist.

7. Vorrichtung nach einem der Ansprüche 2 bis 5,
**dadurch gekennzeichnet,**
**dass** die rechteckige Blende (6) ein quaderförmiger Lichttunnel ist.

## Claims

1. Device for the spatial separation of light reflexes of a beam splitter element (E) for use in confocal microscopy for the computer-controlled generation of three dimensional surface images with a light source (5), a beam splitter element (E) in the shape of a rectangular prism and a multi-pinhole arrangement (2) arranged in the lighting and detection beam path behind the beam splitter element, whereby the incident beam (1) falls on an impact surface of the beam splitter element (E) in the shape of a rectangular prism, wherein said beam splitter element is turned against the incident beam (1) and the geometry of the beam splitter element (E) is created such that the reflection angle in the beam splitter element is 90±3 degrees, whereby, at a refraction index n and an angle of tilt α with an edge length ratio of the rectangular prism A/B=C/D= const., the angle β between the impact surface (A) of the incident beam (1) and the plane (E) splitting the beam is calculated as follows: β = 45° - arcsin (sin(α)/n).

2. Device in accordance with claim 1
**characterised in that**
that an aperture arrangement (6, 8) is provided between the light source (5) and the element (E) splitting the beam, by means of said aperture arrangement the light field is matched to the geometry of the detector and the opening angle of the beam is matched to the aperture of the microscope objective being used, wherein an aperture (6) with a rectangular opening is provided.

3. Device in accordance with claim 1 or 2
**characterised in that**
that the multi-pinhole (2) is a rotating Nipkow disc.

4. Device in accordance with one of claims 1 to 3,
**characterised in that**
the multi-pinhole (2) is a matrix of micro mirrors.

5. Device in accordance with one of claims 1 to 4,
**characterised in that**
the beam splitter is polarising.

6. Device in accordance with one of claims 1 to 4,
**characterised in that**
the beam splitter is dichroic.

7. Device in accordance with one of claims 2 to 5,
**characterised in that**
the rectangular aperture (6) is a rectangular-shaped light tunnel.

## Revendications

1. Dispositif pour séparer dans l'espace des réflexions de lumière d'un élément séparateur de faisceau (E) pour une utilisation en microscopie confocale afin de générer, avec l'aide d'un ordinateur, des images de surfaces tridimensionnelles, lequel dispositif comporte une source de lumière (5), un élément séparateur de faisceau (E) formé comme un parallélépipède ainsi qu'un agencement de trou sténopéique (2) disposé dans le trajet du faisceau d'éclairage et de détection derrière l'élément séparateur de faisceau, dans lequel le faisceau incident (1) est dirigé vers une surface d'incidence de l'élément séparateur de faisceau (E) formé comme un parallélépipède, lequel élément est tourné contre le faisceau incident (1) et la géométrie de l'élément séparateur de faisceau (E) est établie de telle sorte que l'angle de réflexion dans l'élément séparateur de faisceau est de 90 ± 3 degrés, dans lequel pour un indice de réfraction n et une inclinaison α avec un rapport de longueur de côté du parallélépipède A/B = C/D = const., l'angle β entre la surface d'incidence (A) du faisceau incident (1) et la couche séparant le faisceau (E) se calcule comme suit : β = 45° - arcsin (sin (α) /n).

2. Dispositif selon la revendication 1, **caractérisé en ce qu'**entre la source de lumière (5) et l'élément séparant le faisceau (E) est prévu un système de diaphragme (6, 8) par l'intermédiaire duquel le champ éclairé est adapté à la géométrie du détecteur et l'angle d'ouverture du faisceau est adapté à l'ouverture de l'objectif de microscope utilisé, dans lequel un diaphragme (6) est prévu avec une ouverture rectangulaire.

3. Dispositif selon la revendication 1 ou 2, **caractérisé en ce que** le trou sténopéique (2) est un disque de Nipkow rotatif.

4. Dispositif selon l'une quelconque des revendications 1 à 3, **caractérisé en ce que** le trou sténopéique (2) est une matrice constituée de micromiroirs.

5. Dispositif selon l'une quelconque des revendications 1 à 4, **caractérisé en ce que** le séparateur de faisceau est polarisant.

6. Dispositif selon l'une quelconque des revendications 1 à 4, **caractérisé en ce que** le séparateur de faisceau est dichroïque.

7. Dispositif selon l'une quelconque des revendications 2 à 5, **caractérisé en ce que** le diaphragme rectangulaire (6) est un tunnel de lumière parallélépipédique.
